# EUROPEAN PATENT APPLICATION

(11) **EP 4 582 398 A1**
(43) Date of publication of application: **09.07.2025**
(21) Application number: 23860107.4
(22) Date of filing: 21.08.2023
(51) Int. Cl.: C03C 27/12, B32B 17/04, B32B 27/00, B60J 1/00, C09J 7/30

(54) **ADHESIVE LAYER-EQUIPPED FUNCTIONAL FILM FOR LAMINATED GLASS AND LAMINATED GLASS**

(30) Priority: 02.09.2022 JP 2022139843
(71) Applicant: AGC INC., Chiyoda-ku, Tokyo 1008405 (JP)
(72) Inventor: YOKOTE Tatsuo, Tokyo 100-8405 (JP); KAWAKAMI Remi, Tokyo 100-8405 (JP); MITSUI Yoko, Tokyo 100-8405 (JP); KOMORI Atsushi, Tokyo 100-8405 (JP)
(74) Representative: Müller-Boré & Partner Patentanwälte PartG mbB
(86) International application number: PCT/JP2023/029972
(87) International publication number: WO 2024/048344

(57) **Abstract**

Provided is an adhesive layer-equipped functional film for laminated glass that enables the production of a laminated glass having good suppression of wrinkling and interference fringe. The adhesive layer-equipped functional film for laminated glass has a functional film, a first adhesive layer provided on one surface of the functional film, and a second adhesive layer provided on the other surface of the functional film, wherein when the adhesive layer-equipped functional film for laminated glass is used to form a laminated glass, if the thickness of the first adhesive layer is termed T1 and the thickness of the second adhesive layer is termed T2, then T1 is at least 2 µm but less than 380 µm, T2 is at least 380 µm but not more than 760 µm, and the total of T1 and T2 is at least 760 µm, and the functional film is a resin film having a resin layer, wherein the phase difference of the resin layer in the thickness direction measured at a wavelength of 543 nm is not more than 100 nm.

## Description

### TECHNICAL FIELD

The present invention relates to an adhesive layer-equipped functional film for laminated glass, and a laminated glass.

### BACKGROUND ART

Examples of known types of laminated glass in which a functional film is sandwiched between two glass substrates include the following (Patent Document 1).
- Transparent screens in which an image display film having an image display layer laminated to a substrate is sandwiched between two glass substrates via adhesive layers.
- Heat ray reflective laminated glass in which a heat ray reflective film having a heat ray reflective layer laminated to a substrate is sandwiched between two glass substrates via adhesive layers.
- Decorative laminated glass in which a decorative film having a decorative layer such as a pattern laminated to a substrate is sandwiched between two glass substrates via adhesive layers.

These types of laminated glass are produced by laminating a glass substrate, an intermediate film that becomes an adhesive layer, a functional film, an intermediate film that becomes an adhesive layer, and a glass substrate in that sequence, and then conducting heating to adhere the layers together.

However, the difference in thermal shrinkage between the functional film and the adhesive layer and the difference in thermal shrinkage between the functional layer of the functional film and the substrate can sometimes cause the generation of wrinkles in the functional film during production of the laminated glass. Wrinkles tend to form particularly easily when the glass substrate has a shape with a curved surface.

One functional film that has been proposed as a functional film capable of yielding a functional laminated glass that is resistant to wrinkling of the functional film has a functional layer laminated to a support film, wherein the thermal shrinkage at 130°C in a direction A that represents the maximum amount of thermal shrinkage at 130°C is within a range from 0.4 to 0.8%, and the thermal shrinkage at 130°C in a direction B orthogonal to the direction A is within a range from 0.1 to 0.4% (Patent Document 2). A polyethylene terephthalate (PET) film is used as the support film.

### Citation List

### Patent Documents

Patent Document 1: International Patent Publication No. 2020/138235
Patent Document 2: Japanese Examined Patent Application, Second Publication No. 2019-32414

### SUMMARY OF INVENTION

### Technical Problem

However, according to investigations conducted by the inventors of the present invention, in the case of a laminated glass produced using the functional film of Patent Document 2, because the birefringence of the support film is large, in some cases, for example when an observer views the laminated glass while wearing sunglasses, an interference fringe may sometimes occur, impairing the visibility of a scene on the far side of the laminated glass or impairing the visibility of a displayed image. On the other hand, if the support film is excluded from the functional film of Patent Document 2, then wrinkle formation can no longer be satisfactorily suppressed.

The present invention provides an adhesive layer-equipped functional film for laminated glass that enables the production of a laminated glass having good suppression of wrinkling and interference fringe, and also provides a laminated glass having good suppression of wrinkling and interference fringe.

### Solution to Problem

The present invention has the following aspects.
[1] An adhesive layer-equipped functional film for laminated glass, having a functional film, a first adhesive layer provided on one surface of the functional film, and a second adhesive layer provided on the other surface of the functional film, wherein
   when the adhesive layer-equipped functional film for laminated glass is used to form a laminated glass, if the thickness of the first adhesive layer is termed T1 and the thickness of the second adhesive layer is termed T2, then T1 is at least 2 µm but less than 380 µm, T2 is at least 380 µm but not more than 760 µm, and the total of T1 and T2 is at least 760 µm, and
   the functional film is a resin film having a resin layer, and the phase difference of the resin layer in the thickness direction measured at a wavelength of 543 nm is not more than 100 nm.
[2] The adhesive layer-equipped functional film for laminated glass according to [1], wherein T1 is not more than 40% of T2.
[3] The adhesive layer-equipped functional film for laminated glass according to [1] or [2], wherein the resin contains the cured product of a photocurable resin.
[4] The adhesive layer-equipped functional film for laminated glass according to [3], wherein the photocurable resin is at least one type of resin selected from the group consisting of photocurable (meth)acrylic resins, photocurable vinyl resins, and photocurable epoxy resins.
[5] The adhesive layer-equipped functional film for laminated glass according to any one of [1] to [4], wherein the tensile modulus of elasticity of the resin layer at 25°C is not more than 5 GPa.
[6] The adhesive layer-equipped functional film for laminated glass according to any one of [1] to [5], wherein at least one of the first adhesive layer and the second adhesive layer is a polyvinyl butyral resin layer.
[7] The adhesive layer-equipped functional film for laminated glass according to any one of [1] to [6], wherein the functional film is an image display film.
[8] A laminated glass having a first glass substrate, the adhesive layer-equipped functional film for laminated glass according to any one of [1] to [7], and a second glass substrate in that order.
[9] The laminated glass according to [8], wherein the lengths of a first direction and a second direction that intersect orthogonally within the plane of the main surface are each 200 mm or greater.

### [Advantageous Effects of Invention]

The present invention is able to provide an adhesive layer-equipped functional film that enables the production of a laminated glass having good suppression of wrinkling and interference fringe, and can also provide a laminated glass having good suppression of wrinkling and interference fringe.

### BRIEF DESCRIPTION OF DRAWINGS

[FIG. 1] A side view illustrating one example of a laminated glass of the present invention.
[FIG. 2] A cross-sectional view illustrating one example of a functional film.
[FIG. 3] A cross-sectional view illustrating another example of a functional film.
[FIG. 4] A cross-sectional view illustrating one example of a film for a reflective image display that represents one embodiment of a functional film.
[FIG. 5] A diagram illustrating one example of the production steps for a film for a reflective image display.
[FIG. 6] A cross-sectional view illustrating one example of a first intermediate film that represents a first adhesive layer prior to lamination.
[FIG. 7] A diagram illustrating one example of a production process for a first intermediate film.
[FIG. 8] A cross-sectional view illustrating another example of a laminated glass of the present invention.

### DESCRIPTION OF EMBODIMENTS

The meanings and definitions of the terminology used in the present invention are as follows.

A "first surface" means the outermost surface of an image display film or transparent screen through which the image light from the projector is projected.

A "second surface" means the outermost surface of an image display film or transparent screen on the opposite side from the first surface.

A "scene on the first surface side (second surface side)" means an image which, when viewed by an observer on the second surface side (first surface side) of the image display film or transparent screen, is visible on the far side of the image display film or transparent screen. Scenes do not include images of image light projected from a projector and displayed on the image display film or transparent screen.

An "uneven structure" means an uneven shape composed of a plurality of protrusions, a plurality of recesses, or a plurality of protrusions and recesses.

A "film" may be a sheet or a continuous belt-like form.

In this description and in the claims, an expression "a to b" denoting a numerical range is deemed to include the numerical values of a and b as the lower limit and upper limit respectively.

The "phase difference in the thickness direction", "tensile modulus of elasticity" and "coefficient of linear expansion" are measured using the methods described below in the examples.

The term "(meth)acrylate" means acrylate or methacrylate. The term "(meth)acryloyl group" means an acryloyl group or methacryloyl group.

The present invention is described below in further detail with reference to the drawings. To facilitate explanation, the dimensions of the various members in each drawing may sometimes differ from actual scale.

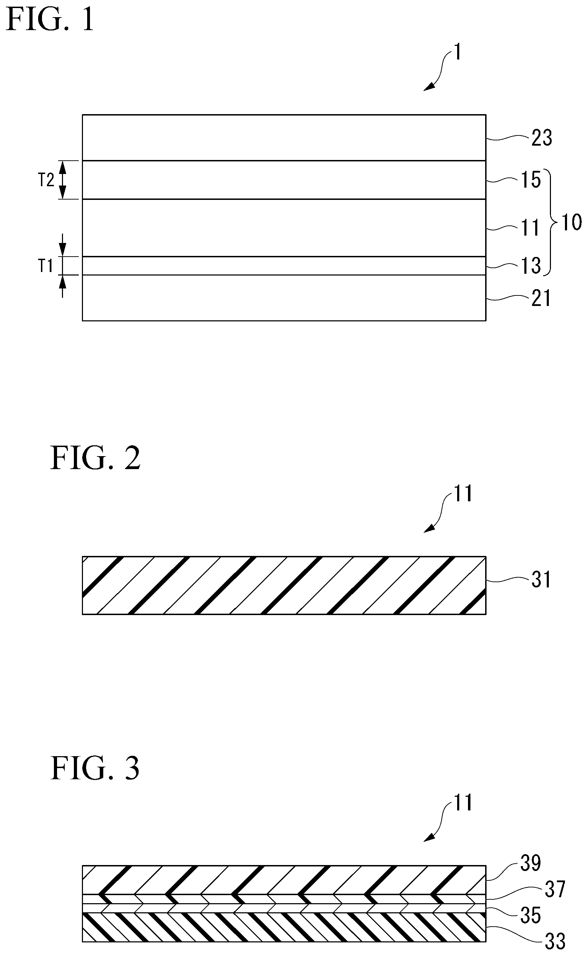

FIG. 1 is a schematic side view illustrating one example of a laminated glass of the present invention.

The laminated glass 1 has a first glass substrate 21, an adhesive layer-equipped functional film for laminated glass 10, and a second glass substrate 23 in that order.

The adhesive layer-equipped functional film for laminated glass 10 has a functional film 11, a first adhesive layer 13 provided on one surface of the functional film 11, and a second adhesive layer 15 provided on the other surface of the functional film 11. In this example, the adhesive layer-equipped functional film for laminated glass 10 is disposed so that the side having the first adhesive layer 13 is disposed on the side of the first glass substrate 21.

Although there are no particular limitations on the size of the laminated glass 1, the lengths of a first direction and a second direction that intersect orthogonally within the plane of the main surface of the laminated glass 1 are each preferably 200 mm or greater. Provided the length in each of these directions of the laminated glass 1 is 200 mm or greater, when the laminated glass 1 is used, for example, as a vehicle windshield (such as the front glass of a vehicle), better visibility can be ensured. The lengths of the first direction and the second direction are each more preferably 300 mm or greater.

Although there are no particular limitations on the upper limit for the lengths of the first direction and the second direction, from the viewpoints of production and transport of the laminated glass, the lengths are preferably not more than 2,500 mm, and more preferably 2,000 or less.

The length of the first direction represents the maximum length of the laminated glass 1 in the first direction. Similarly, the length in the second direction represents the maximum length of the laminated glass 1 in the second direction.

The length of the first direction and the length of the second direction may be the same or different.

The first direction may be set arbitrarily, but for example, in those cases where the laminated glass 1 is disposed with the main surface inclined relative to the horizontal surface, the widthwise direction (left-right direction) of the laminated glass 1 may be designated as the first direction. In this case, the vertical direction (up-down direction) becomes the second direction. Further, in those cases where the main surface of the laminated glass 1 is a four-sided shape (such as a rectangle or trapezoid), the direction along the longest side among the four sides of the main surface of the laminated glass 1 may be designated as the first direction. The corners of the four-sided shape may be arch-shaped or rounded.

In those cases where the main surface of the laminated glass 1 is a curved surface, the radius of curvature R of the curved surface is not particularly limited, and may be set appropriately in accordance with the intended use and the type of the laminated glass 1, but is typically within a range from 300 to 10,000 mm.

In those cases where the laminated glass 1 is disposed with the main surface inclined relative to the horizontal surface, the widthwise direction of the laminated glass 1 is deemed the first direction, and the vertical direction is deemed the second direction, the radius of curvature of the first direction (widthwise direction), for example in the case where the laminated glass is used as a vehicle windshield, is preferably not more than 10,000 mm, and more preferably not more than 6,000 mm, but is preferably at least 1,000 mm, and more preferably 1,500 mm or greater. On the other hand, the radius of curvature of the second direction (vertical direction), in the case where the laminated glass is used as a vehicle windshield, is preferably not more than 20,000 mm, but is preferably at least 4,000 mm, and more preferably 6,000 mm or greater.

Here, the radius of curvature of the first direction indicates the radius of curvature of a curve extending across the main surface of the laminated glass 1 in the first direction, and the radius of curvature of the second direction indicates the radius of curvature of a curve extending across the main surface of the laminated glass 1 in the second direction. The radius of curvature can be measured by measuring the shape of the entire laminated glass 1 at a prescribed pitch, for example at a pitch of 20 mm, and then converting the measurement results to a radius of curvature in the first direction or second direction. The laminated glass 1 preferably has radii of curvature across the entire glass area that fall within the radius of curvature ranges described above.

### <First Glass Substrate, Second Glass Substrate>

Examples of the glass used for forming the glass substrates (the first glass substrate 21 and the second glass substrate 23) include soda lime glass, alkali-free glass, borosilicate glass, and aluminosilicate glass. In order to improve durability, the glass substrates may be subjected to chemical strengthening, physical strengthening, or hard coating or the like.

The glass substrates may have a flat shape or a shape with a curved surface. With conventional technology, the functional film has tended to be more prone to wrinkling in the case of glass substrates having a shape with a curved surface rather than glass substrates with a flat shape, but in the present invention, a shape with a curved surface is actually preferred, confirming the excellent usability of the present invention.

In those cases where the glass substrates have a curved surface, the outer surface of each glass substrate may be composed entirely of a curved surface, or may be composed of a portion with a curved surface and a flat portion. In the case where the entire outer surface is a cured surface, or in the case where the substrate has a plurality of portions with curved surfaces, the curvature may be constant, or may vary depending on the region. Examples of glass substrates having a curved surface include the types of shapes observed in a vehicle windshield application, where one surface is curved with a convex surface and the other surface is curved with a concave surface. Here, the expression "curved surface" refers to macro curved surfaces which ignore regions that may be visible under laser microscopy.

When the glass substrates have curved surfaces, the radius of curvature R of the curved surfaces may be set in accordance with the desired radius of curvature for the laminated glass 1.

The thickness of each glass substrate is, for example, within a range from 0.2 to 10 mm, and the thickness may be determined appropriately in accordance with the intended application.

For example, in the case where the laminated glass 1 is a windshield and the first glass substrate is the glass substrate on the outside of the vehicle, the thickness of the first glass substrate is preferably at least 1.8 mm but not more than 3.0 mm, and more preferably at least 1.9 mm but not more than 2.3 mm. By ensuring that the thickness of the first glass substrate falls within this range, a large increase in weight resulting in a deterioration in moldability can be suppressed, while maintaining suitable resistance to flying stones and the like. On the other hand, the thickness of the second glass substrate on the inside of the vehicle is preferably at least 0.3 mm but not more than 2.3 mm, and more preferably at least 0.4 mm but not more than 2.0 mm. Provided the thickness of the second glass substrate is at least 0.3 mm, handling during production and assembly is easier, whereas provided the thickness is not more than 2.3 mm, the second glass substrate is not too thick relative to the first glass substrate, reducing the possibility of mismatch when the first glass substrate and second glass substrate are bent and molded into curved shapes and then laminated together, and enabling the glass substrates to better conform to the adhesive layers.

The thickness of each glass substrate refers to the length through the thickness direction of the glass substrate.

### <First Adhesive Layer, Second Adhesive Layer>

The adhesive layers (the first adhesive layer 13 and the second adhesive layer 15) are used for bonding the functional film **11** to the glass substrates (the first glass substrate 21 and the second glass substrate 23).

Examples of the adhesive layers include thermoplastic resin layers.

Examples of the thermoplastic resin that constitutes the thermoplastic resin layer include the thermoplastic resins conventionally used in these types of applications, such as polyvinyl acetal-based resins (for example, polyvinyl butyral resin (hereinafter also abbreviated as PVB)), polyvinyl chloride-based resins, saturated polyester-based resins, polyurethane-based resins, ethylene-vinyl acetate copolymer-based resins (for example, ethylene-vinyl acetate copolymers (hereinafter also abbreviated as EVA)), ethylene-ethyl acrylate copolymer-based resins, ionomers (for example, materials in which ethylene-methacrylic acid copolymer molecules are crosslinked with metal ions), and cycloolefin polymers (hereinafter also abbreviated as COP). A combination of two or more of these thermoplastic resin types may also be used. In terms of the heat resistance and weather resistance, PVB is preferred as the thermoplastic resin. Accordingly, a PVB layer is preferred as each of the adhesive layers.

PVB can be obtained, for example, by reacting a polyvinyl alcohol and n-butyraldehyde.

The thermoplastic resin layer may contain one or more other components besides the thermoplastic resin. Examples of these other components include additives such as silane compounds such as epoxy silanes, amino silanes, acrylic silanes and methacrylic silanes, plasticizers, and antioxidants.

When a silane compound is incorporated in the thermoplastic resin layer, the silane compound acts as a binder between the thermoplastic resin and the glass, thereby improving the adhesion to the glass. In those cases where the thinner first adhesive layer 13 is a thermoplastic resin layer, the adhesive layer preferably contains a silane compound.

The amount of additives in the thermoplastic resin layer, per 100 parts by mass of the thermoplastic resin, is preferably not more than 20 parts by mass, and more preferably not more than 5 parts by mass, and may be 0 parts by mass.

In those cases where the thermoplastic resin layer contains a silane compound, the amount of the silane compound, per 100 parts by mass of the thermoplastic resin, is preferably within a range from 0.1 to 10 parts by mass, and more preferably from 1 to 5 parts by mass. Provided the amount of the silane compound is at least as high as the above lower limit, the adhesion between the glass substrate and the thermoplastic resin layer is more superior, and provided the amount is not more than the above upper limit, cracking of the glass substrate caused by the film becoming overly hard can be more easily prevented.

The materials that constitute the first adhesive layer 13 and the second adhesive layer 15 may be the same or different. For example, in those cases where the first adhesive layer 13 and the second adhesive layer 15 are both thermoplastic resin layers, the thermoplastic resin that constitutes the first adhesive layer 13 and the thermoplastic resin that constitutes the second adhesive layer 15 may be the same or different. The amount of the thermoplastic resin in the first adhesive layer 13 and the amount of the thermoplastic resin in the second adhesive layer 15 may be the same or different.

In terms of ensuring both favorable penetration resistance and good adhesive strength between the functional film 11 and the glass substrates, at least one of the first adhesive layer 13 and the second adhesive layer 15 is preferably a PVB layer. In terms of the adhesive strength between the functional film 11 and the glass substrate, it is more preferable that at least the first adhesive layer 13 is a PVB layer. In terms of preventing shattering of the laminated glass by flying stones or the like, it is more preferable that at least the second adhesive layer 15 is a PVB layer. A laminated glass in which the first adhesive layer 13 and the second adhesive layer 15 are both PVB layers is particularly desirable.

The thickness T1 of the first adhesive layer 13 is at least 2 µm but less than 380 µm. Provided that T1 is less than 380 µm, wrinkling during production of the laminated glass can be better suppressed. Provided that T1 is at least 2 µm, satisfactory adhesive strength between the functional film 11 and the glass substrate can be ensured.

T1 is preferably at least 2 µm but less than 220 µm, and more preferably at least 4 µm but less than 150 µm.

T1 represents the thickness of the first adhesive layer 13 within the formed laminated glass.

T1 is thinner than the thickness T2 of the second adhesive layer 15 (T1<T2). By ensuring that T1<T2, wrinkling is less likely to occur during bending and molding of the laminated glass.

In terms of the balance between the penetration resistance and the adhesive strength between the functional film 11 and the glass substrate, the value of T1 relative to T2 is preferably not more than 20%, and more preferably 5% or lower.

In terms of ensuring satisfactory adhesive strength between the functional film 11 and the glass substrate, the value of T1 relative to T2 is preferably at least 0.2%.

The thickness T2 of the second adhesive layer 15 is at least 380µm but not more than 760 µm. Provided that T2 is at least 380 µm, the combined total of T1 and T2 can reach at least 760 µm, thereby better preventing shattering of the glass by flying stones or the like. Provided that T2 is not more than 760 µm, increases in the weight of the adhesive layer-equipped functional film and the laminated glass can be better suppressed, and the handling properties improve.

T2 is preferably greater than 380 µm but not more than 760 µm.

T2 represents the thickness of the second adhesive layer 15 within the formed laminated glass.

The total of T1 and T2 (T1+T2) is at least 760 µm, and preferably at least 764 µm. Provided that T1+T2 is at least 760 µm, the safety performance required of the laminated glass, such as penetration resistance, can be better ensured.

The value of T1+T2 is less than 1,140 µm, and from the viewpoints of suppressing increases in the weight of the laminated glass and production costs, T1+T2 is preferably less than 800 µm.

### <Functional Film>

The functional film 11 has a resin layer. The resin layer within the functional film 11 may be composed of a single layer or two or more layers. The resin layer is described below in detail.

Examples of the configuration of the functional film 11 include configurations in which the resin layer is the functional layer, and configurations having a separate functional layer that does not correspond with a resin layer in addition to the resin layer.

The functional layer has the object of imparting functionality to the functional film 11. For example, in those cases where the functional film 11 is an image display film, the functional film has at least an image display layer as a functional layer.

The functional film 11 may also have one or more other layers besides the resin layer and the functional layer.

More specific embodiments of the functional film 11 are described below in detail.

The thickness of the functional film 11 varies depending on the function of the functional film 11, but is preferably within a range from 100 to 1,000 µm, and more preferably from 100 to 500 µm. Provided the thickness of the functional film 11 is at least as large as the above lower limit, the wrinkle suppression effect is more superior, whereas provided the thickness is not more than the above upper limit, the cutting workability of the functional film 11 is more favorable.

The functional film 11 typically exhibits light transmissibility.

The total light transmittance of the functional film 11 is preferably at least 5%, more preferably at least 10%, even more preferably at least 15%, and still more preferably 50% or higher. Further, the total light transmittance is preferably not more than 90%. Provided the total light transmittance is at least as high as the above lower limit, the transparency of the functional film 11 and the background visibility are excellent, and provided the total light transmittance is not more than the above upper limit, the functionality of the functional film 11 can manifest satisfactorily.

The "total light transmittance" is measured in accordance with JIS K 7361:1997 (ISO 13468-1:1996).

### (Resin Layer)

The resin layer is a resin film having a phase difference in the thickness direction measured at a wavelength of 543 nm (hereinafter also referred to as the birefringence) of not more than 100 nm.

Provided the birefringence of the resin layer is not more than 100 nm, the occurrence of interference fringes on the laminated glass 1 can be suppressed. From the viewpoint of this interference fringe suppression effect, the birefringence of the resin layer is preferably not more than 50 nm, and more preferably 40 nm or less.

The functional film 11 preferably does not have a resin layer with birefringence exceeding 100 nm.

The birefringence of the resin layer can be adjusted, for example, by altering the type of resin, by conducting processes such as stretching during production of the resin layer, or by adding an alignment material.

Examples of the resin that constitutes the resin layer include cured products of curable resins, and thermoplastic resins.

Examples of the curable resins include photocurable resins and heat-curable resins. Examples of the photocurable resins include photocurable (meth)acrylic resins, photocurable vinyl resins, and photocurable epoxy resins. Examples of the heat-curable resins include heat-curable (meth)acrylic resins, and heat-curable epoxy resins.

Examples of the thermoplastic resins include polyesters (such as polyethylene terephthalate (hereinafter also abbreviated as PET) and polyethylene naphthalate), acrylic resins, polyolefins, cycloolefin polymers (hereinafter also abbreviated as COP), polycarbonates, polyimides, urethane resins, ionomers, polyvinyl acetal-based resins (such as polyvinyl butyral hereinafter also abbreviated as PVB), ethylene-vinyl acetate copolymers (hereinafter also abbreviated as EVA), fluorine resins, and silicone resins.

From the viewpoint of moldability, the resin preferably includes a cured product of a curable resin.

From the viewpoint of enabling instantaneous curing by irradiation with ultraviolet (UV) light, the curable resin is preferably a photocurable resin, and from the viewpoint of transparency, is more preferably a photocurable (meth)acrylic resin.

Photocurable (meth)acrylic resins contain a (meth)acrylate.

Examples of the (meth)acrylate include (meth)acrylate monomers and (meth)acrylate oligomers.

Examples of the (meth)acrylate monomers include monofunctional (meth)acrylate monomers and polyfunctional (meth)acrylate monomers.

Examples of the monofunctional (meth)acrylate monomers include isobornyl (meth)acrylate and the like.

Examples of the polyfunctional (meth)acrylate monomers include tricyclodecane dimethanol di(meth)acrylate, neopentyl glycol hydroxypivalate di(meth)acrylate, 9,9-bis[4-(2-hydroxyethoxy)phenyl]fluorene di(meth)acrylate, and dipentaerythritol hexa(meth)acrylate.

Examples of the (meth)acrylate oligomers include poly(meth)acrylates of polyether polyols, poly(meth)acrylates of polyester polyols, and urethane (meth)acrylate.

Examples of the polyether polyols include polyoxyalkylene polyols such as polyethylene glycol, polypropylene glycol and polytetramethylene glycol.

Examples of the polyester polyols include caprolactone-modified dipentaerythritol and caprolactone-modified neopentyl glycol hydroxypivalate.

The weight average molecular weight of the (meth)acrylate oligomer is, for example, within a range from 300 to 10,000. The weight average molecular weight of the (meth)acrylate oligomer refers to the polystyrene-equivalent weight average molecular weight obtained by gel permeation chromatography (GPC) measurement. In the GPC measurement, in those cases where a peak appears for an unreacted low-molecular weight component (such as a monomer), that peak is ignored when determining the weight average molecular weight.

The (meth)acrylate that constitutes the photocurable (meth)acrylic resin may be a single type of (meth)acrylate or a combination of two or more types.

In the photocurable (meth)acrylic resin, ensuring that the total mass of photocurable reactive groups relative to the total mass of the photocurable (meth)acrylic resin is a proportion of not more than 26% by mass is preferable in terms of lowering the compressive stress that develops during photocuring and suppressing warping of the film. This proportion of the total mass of photocurable reactive groups relative to the total mass of the photocurable (meth)acrylic resin is more preferably not more than 24% by mass, and even more preferably 22% by mass or less. Here, the total mass of the photocurable reactive groups represents the total mass of the (meth)acryloyl groups.

The photocurable (meth)acrylic resin preferably includes a (meth)acrylate with a (meth)acrylic equivalent weight of at least 200 g/eq (hereinafter also referred to as "(meth)acrylate a"). By including the (meth)acrylate a, the proportion of reactive sites in the photocurable (meth)acrylic resin is lowered, thereby suppressing shrinkage during curing, and suppressing curling of the functional film. Further, the modulus of elasticity of the resin layer decreases, improving the cutting workability of the functional film. The (meth)acrylic equivalent weight of the (meth)acrylate a is preferably at least 270 g/eq, and more preferably 320 g/eq or greater.

Although there are no particular limitations on the upper limit of the (meth)acrylic equivalent weight of the (meth)acrylate a, the upper limit may be, for example, 20,000 g/eq.

The (meth)acrylic equivalent weight represents the value of the molecular weight of the (meth)acrylate divided by the number of (meth)acryloyl groups. The molecular weight of the (meth)acrylate represents the value of the weight average molecular weight obtained by GPC measurement in the case of compounds for which a molecular weight distribution can be obtained by GPC measurement, and represents the formula weight calculated from the structural formula in the case of compounds for which a molecular weight distribution cannot be obtained by GPC measurement.

Examples of the (meth)acrylate a include difunctional (meth)acrylate oligomers having a weight average molecular weight of at least 540 (such as caprolactone-modified neopentyl glycol hydroxypivalate di(meth)acrylate), and hexafunctional (meth)acrylate oligomers having a weight average molecular weight of at least 1,262 (such as caprolactone-modified dipentaerythritol hexaacrylate).

The (meth)acrylate a is preferably a polyfunctional (meth)acrylate. By using a polyfunctional (meth)acrylate, the modulus of elasticity of the resin layer can be adjusted to a suitable hardness.

Among the possible polyfunctional (meth)acrylates, (meth)acrylate oligomers are preferred. By using a (meth)acrylate oligomer, the coefficient of linear expansion for the resin layer can be increased. As the coefficient of linear expansion for the resin layer increases, the difference between the shrinkage rates of the resin layer and the adhesive layer during production of the laminated glass decreases, enabling wrinkling of the functional film to be more effectively suppressed. Further, the viscosity of the coating liquid used for forming the transparent resin layer can be increased, enabling the thickness of the resin layer to be more easily increased.

The photocurable (meth)acrylic resin may also contain one or more other (meth)acrylates besides the (meth)acrylate a.

Polyfunctional (meth)acrylate monomers having a (meth)acrylic equivalent weight of less than 200 g/eq (hereinafter also referred to as "(meth)acrylate b") are preferred as the other (meth)acrylate. By including the (meth)acrylate b in the photocurable (meth)acrylate resin, the strength of the cured product (the resin layer) can be increased. Further, the viscosity of the coating liquid used for forming the resin layer can be reduced, improving the coating properties.

Although there are no particular limitations on the lower limit for the (meth)acrylic equivalent weight of the (meth)acrylate b, the lower limit may be, for example, 85 g/eq.

From the viewpoint of increasing the refractive index of the resin layer, the (meth)acrylate b may include a polyfunctional (meth)acrylate monomer containing an alicyclic structure, such as tricyclodecane dimethanol di(meth)acrylate.

From the viewpoint of adjusting the mechanical characteristics and adhesion of the cured resin, the (meth)acrylate b may contain a urethane (meth)acrylate having a (meth)acrylic equivalent weight of at least 100 g/eq but less than 200 g/eq.

Monofunctional (meth)acrylate monomers for which the glass transition temperature (hereinafter also abbreviated as Tg) of the associated homopolymer is at least 0°C (hereinafter also referred to as "(meth)acrylate c") are also preferred as the other (meth)acrylate. By including the (meth)acrylate c in the photocurable (meth)acrylate resin, the crosslinking density of the cured product decreases, which enables the storage modulus at high temperature (for example, 180°C) to be lowered while maintaining the tensile modulus of elasticity at room temperature (for example, 20°C) at a suitably high level, and improves the cutting workability of the functional film.

The Tg value for the homopolymer of the (meth)acrylate c is preferably at least 25°C, and more preferably 60°C or higher. Although there are no particular limitations on the upper limit for the Tg value, which may be, for example, 80°C.

The Tg value of the homopolymer can be determined using a DSC (differential scanning calorimeter).

Examples of the (meth)acrylate c include isobornyl acrylate (homopolymer Tg: 97°C) and the like.

The proportion of the (meth)acrylate a relative to the total mass of the photocurable (meth)acrylic resin is preferably at least 20% by mass, more preferably at least 40% by mass, even more preferably at least 50% by mass, and particularly preferably 60% by mass or higher. Provided the proportion of the (meth)acrylate a is at least as high as the above lower limit, a satisfactory curling suppression effect and cutting workability improvement effect can be more easily achieved.

The proportion of the (meth)acrylate a may be 100% by mass, but in those cases where the photocurable (meth)acrylic resin includes one or more other (meth)acrylates, the proportion of the (meth)acrylate a is preferably not more than 95% by mass, more preferably not more than 90% by mass, and even more preferably 80% by mass or less.

In those cases where the photocurable (meth)acrylic resin includes the (meth)acrylate b, the proportion of the (meth)acrylate b relative to the total mass of the photocurable (meth)acrylic resin is preferably within a range from 5 to 60% by mass, more preferably from 10 to 50% by mass, and even more preferably from 20 to 40% by mass. Provided the proportion of the (meth)acrylate b is at least as high as the above lower limit, the strength of the resin layer can be increased, whereas provided the proportion is not more than the above upper limit, the viscosity of the coating liquid used for forming the resin layer can be increased, making it easier to increase the thickness of the resin layer.

In those cases where the photocurable (meth)acrylic resin includes the (meth)acrylate c, the proportion of the (meth)acrylate c relative to the total mass of the photocurable (meth)acrylic resin is preferably within a range from 5 to 30% by mass, more preferably from 10 to 25% by mass, and even more preferably from 10 to 20% by mass. Provided the proportion of the (meth)acrylate c is at least as high as the above lower limit, the cutting workability of the functional film is more superior, whereas provided the proportion is not more than the above upper limit, the strength of the resin layer is more superior.

The resin that constitutes the resin layer may be a mixture of a cured product of a curable resin and a thermoplastic resin. By combining a cured product of a curable resin with a thermoplastic resin, a curling suppression effect and a cutting workability improvement effect can be expected.

In terms of transparency, the mixture is preferably a mixture of the cured product of a photocurable (meth)acrylic resin and a thermoplastic acrylic resin.

From the viewpoint of the moldability, the proportion of the cured product of the curable resin relative to the total mass of the mixture of the cured product of the curable resin and the thermoplastic resin is preferably at least 60% by mass, and more preferably at least 70% by mass, whereas from the viewpoint of preventing warping and cracking during cutting processing, the proportion is preferably not more than 90% by mass, and more preferably 80% by mass or less.

The resin layer may, if necessary, also contain components other than resins. Examples of components other than resins include organic materials besides resins, and inorganic materials. Examples of the inorganic materials include metals, metal oxides, glass, quartz, ceramics, and carbon-based materials (such as carbon black).

The proportion of resins relative to the total mass of the resin layer is preferably at least 80% by mass, more preferably at least 90% by mass, and may be 100% by mass.

The tensile modulus of elasticity of the resin layer at 25°C is preferably not more than 5 GPa, more preferably not more than 3 GPa, and even more preferably 1 GPa or less. Further, the tensile modulus of elasticity at 25°C is preferably at least 0.3 GPa, more preferably at least 0.5 GPa, and even more preferably 0.7 GPa or greater. Provided the tensile modulus of elasticity is not more than the above upper limit, the occurrence of wrinkling caused by shrinkage of the resin layer during cooling from high temperatures tends to be better suppressed, and suppression of cracking during cutting tends to be superior. Provided the tensile modulus of elasticity is at least as high as the above lower limit, the wrinkling suppression effect tends to be more superior. The above upper limit and lower limit values may be combined as appropriate. For example, the tensile modulus of elasticity may be within a range from 0.3 to 5 GPa, from 0.5 to 3 GPa, or from 0.7 to 1 GPa.

The tensile modulus of elasticity can be adjusted, for example, by adding a chain transfer agent.

The mold shrinkage for the resin layer is preferably less than 3%, and more preferably less than 2%. Further, the mold shrinkage is preferably at least 0.1%. Provided the mold shrinkage is not more than the above upper limit, changes in the shape of the resin layer can be reduced. Provided the mold shrinkage is at least as high as the above lower limit, wrinkling tends to be less likely.

The "mold shrinkage" can be determined as (specific gravity after curing - specific gravity before curing) × 100 / (specific gravity after curing). Specifically, the coating liquid is applied to a smooth PET film in sufficient quantity to form a length of 20 to 100 mm and a cured thickness of 20 to 100 µm, and the applied length is measured immediately after application. Following curing of the applied liquid, the length after curing is measured. From the obtained results, the mold shrinkage can be calculated as (length immediately after application - length after curing) × 100 / (length immediately after application).

The mold shrinkage can be adjusted by the addition of fillers or the like.

Examples of the resin layer in those cases where the resin layer is a functional layer include reflective films in which a plurality of resin layers with different refractive indices are stacked in the thickness direction, and ultraviolet absorption layers.

In those cases where the functional film 11 has a functional layer separate from the resin layer, the resin layer may be used, for example, as a substrate for forming the functional layer, as an adhesive layer, or as a protective layer.

An adhesive layer is a layer that is provided between the resin layer and the functional layer to enhance the adhesion between the two layers. Examples of this adhesive layer include layers of thermoplastic resins such as COP, (meth)acrylic resins, polyester resins, urethane resins, polycarbonate resins, PVB and EVA.

A protective layer is a layer that is provided on the outermost surface of the functional film to protect the surface of the functional layer and the surface of the resin layer. Examples of the protective layer include hard coat layers formed from the cured product of a curable resin.

### (Functional Layer)

Examples of functional layers that do not correspond with a resin layer include reflective films formed from an inorganic material.

A reflective film is a film that reflects a portion of incident light and transmits a portion. Examples of functions that may be provided by reflective films include an image display function, heat ray reflective function, decorative function, light dimming function, mirror function, soundproofing (sound insulation) function, an electromagnetic wave control function.

Examples of inorganic materials used in forming a reflective film include metals, metal oxides, and metal nitrides. Examples of the metals include Al, Ag, Cr, Mo, In, Ni, Ta, Ti, Cu and W. Examples of the metals in the metal oxides and metal nitrides include the same metals. The reflective film may be a single layer film or a multilayer film.

Examples of the reflective film include metal films, semiconductor films, dielectric single layer films, dielectric multilayer films, and combinations of these films. Among the various possibilities, a metal film containing at least one metal element selected from the group consisting of Al, Ag, Cr, Mo, In, Ni, Ta, Ti, Cu and W, or a metal film or metal oxide film formed from an alloy containing Ag is preferred.

### (Functional Film Embodiments)

Embodiments of the functional film 11 may be any film having a resin layer, but specific examples include a functional film formed from a resin layer 31 such as that illustrated in FIG. 2, and a functional film having a resin substrate 33 (resin layer), a functional layer 35, an adhesive layer 37 (resin layer) and a protective layer 39 (resin layer) laminated in that order, such as the functional film illustrated in FIG. 3. In the embodiment illustrated in FIG. 3, a configuration without the adhesive layer 37 may also be used.

Examples of more specific embodiments of the functional film 11 include image display films having an image display layer, heat ray reflective films having a heat ray reflective layer, decorative films having a decorative layer, mirror films having a mirror layer, soundproofing films having a soundproofing layer, and electromagnetic wave control films having an electromagnetic wave control layer. These functional films may, if necessary, also have a protective layer, an adhesive layer, or an ultraviolet absorption layer or the like.

Examples of the image display layer include reflective film with an uneven structure formed from an inorganic material, resin layers having a light scattering material dispersed within the resin, and resin layers containing a dispersed fluorescent material.

Examples of the heat ray reflective layer include layers having alternately laminated layers of a high refractive index layer and a low refractive index layer.

Examples of the decorative layer include printed layers formed by printing a reflective film-forming ink in a decorative design.

Examples of the mirror layers include half mirror layers, namely reflective films that reflect a portion of incident light and transmit a portion.

Examples of the soundproofing layer include layers having a reflective film formed on the surface of pore structures embedded within a resin layer.

Examples of the electromagnetic wave control layer include reflective films of ITO or the like.

The functional film 11 may also contain two or more of the above functional layers.

Examples of specific configurations of the functional film 11 include those described in International Patent Publication No. 2015/186630, International Patent Publication No. 2015/186668, Japanese Patent (Granted) Publication No. 4848872, Japanese Unexamined Patent Application, First Publication No. 2010-111122, International Patent Publication No. 2013/168714, Japanese Unexamined Patent Application, First Publication No. Hei 08-157239, Japanese Unexamined Patent Application, First Publication No. 2009-078962, and International Patent Publication No. 2020/138235.

In terms of exhibiting superior usability in suppressing wrinkling and interference fringes, an image display film is preferred as the functional film 11.

An image display film is a film that enables a scene on the far side of the film to be viewed, while also enabling image light to be projected onto the film and displayed as a viewable image. Specifically, an image display film is a film having a first surface and a second surface on the opposite side from the first surface, wherein a scene on the side of the first surface is transmitted through the film and is visible by an observer on the side of the second surface, a scene on the side of the second surface is transmitted through the film and is visible by an observer on the side of the first surface, and image light projected from a projector installed on the side of the first surface is displayed on the film and viewable as an image by either an observer on the first surface side or an observer on the second surface side.

The image display film may be either a reflective image display film in which the image light projected from the side of the first surface is displayed on the film and is viewable as an image by an observer on the first surface side, or a transmissive image display film in which the image light projected from the side of the first surface is displayed on the film and is viewable as an image by an observer on the second surface side.

In those cases where the functional film 11 is an image display film, the laminated glass 1 functions as a laminated glass for image display. The laminated glass for image display can be used as a transparent screen.

This type of transparent screen enables a scene on the far side of the screen to be viewed, and can display image light projected onto the screen as a viewable image. Specifically, the transparent screen is a screen having a first surface and a second surface on the opposite side from the first surface, wherein a scene on the side of the first surface is transmitted through the screen and is visible by an observer on the side of the second surface, a scene on the side of the second surface is transmitted through the screen and is visible by an observer on the side of the first surface, and image light projected from a projector installed on the side of the first surface is displayed on the screen and viewable as an image by either an observer on the first surface side or an observer on the second surface side.

The transparent screen may be either a reflective transparent screen in which the image light projected from the side of the first surface is displayed on the screen and is viewable as an image by an observer on the first surface side, or a transmissive transparent screen in which the image light projected from the side of the first surface is displayed on the screen and is viewable as an image by an observer on the second surface side.

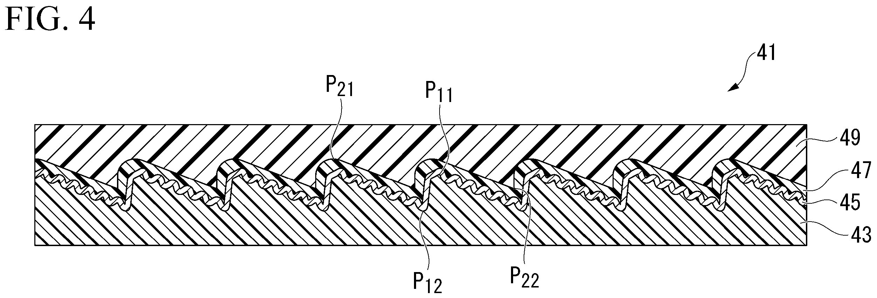

FIG. 4 illustrates one example of a reflective image display film that represents one embodiment of the functional film 11.

The reflective image display film 41 has a resin substrate 43 (resin layer), a reflective film 45, an adhesive layer 47 (resin layer), and a protective layer 49 (resin layer) laminated in that order.

The resin substrate 43 has an uneven structure on the surface on the side of the reflective film 45.

The reflective film 45 is provided along this surface of the resin substrate 43, and has an uneven structure of the same shape as the uneven structure of the resin substrate 43.

The resin that constitutes the resin substrate 43 and the resin that constitutes the protective layer 49 are preferably the same.

The thickness of the reflective image display film 41 is preferably within a range from 10 to 1,000 µm, more preferably from 15 to 500 µm, and even more preferably from 50 to 400 µm.

The uneven structure on the surface of the resin substrate 43 is provided with the object of imparting an uneven structure to the reflective film 45.

The uneven structure on the surface of the resin substrate 43 may be a regular uneven structure in which a plurality of protrusions (or a plurality of recesses) are arrayed periodically (such as a micro lens array structure), or may be a random uneven structure. In this embodiment, the cross-sectional shape of the protrusions (or recesses) is an approximate right-angled triangular shape, with one of the two sides adjacent to the right angle forming the bottom surface. However, the cross-sectional shape of the protrusions (or recesses) is not limited to this shape, and other polygonal shapes such as triangular shapes other than a right-angled triangular shape, saw tooth shapes, bow shapes, or shapes derived from these types of shapes may also be used.

In the uneven structure on the surface of the resin substrate 43, the maximum height of the protrusions (or the maximum depth of the recesses) is, for example, within a range from 0.5 to 3.0 µm. Here, in the uneven structure of the resin substrate 43, the maximum height of the protrusions (or the maximum depth of the recesses) refers to the distance, when the protective layer 49 side of the reflective image display film 41 in the thickness direction is deemed the upward side, between the horizontal plane that passes through the highest position P₁₁ of the uneven structure (namely, the position closest to the protective layer 49), and the horizontal plane that passes through the lowest position P₁₂ of the uneven structure (namely, the position farthest from the protective layer 49).

The alignment direction of the plurality of protrusions (or plurality of recesses) may be a single direction or two or more directions. The pitch between the plurality of protrusions (or plurality of recesses) is, for example, within a range from 15 to 300 µm.

A fine uneven structure is provided on the surface of the protrusions (or recesses). This fine uneven structure is an uneven structure for causing diffuse reflection of the image light in a forward direction, and is provided for the purpose of image display.

The maximum thickness of the resin substrate 43 is, for example, within a range from 5 to 150 µm, and is preferably from 10 to 100 µm, and more preferably from 15 to 75 µm. Here, the maximum thickness of the resin substrate 43 refers to the shortest distance, when the protective layer 49 side of the reflective image display film 41 in the thickness direction is deemed the upward side, from the highest position P₁₁ of the uneven structure on the surface of the resin substrate 43 to the surface (smooth surface) on the opposite side of the resin substrate 43 from the reflective film 45.

The reflective film 45 may be any film that transmits a portion of the light incident on the reflective film 45 and reflects another portion. The reflective film 45 is typically formed from an inorganic material. The reflective film 45 may be a single layer film or a multilayer film.

The reflective film 45 is formed along the surface of the resin substrate 43 and has an uneven structure of the same shape as the resin substrate 43. In other words, the shape of the surface of the reflective film 45 on the side of the resin substrate 43 and the shape of the surface of the reflective film 45 on the opposite side from the resin substrate 43 both follow the shape of the surface of the resin substrate 43 on the side of the reflective film 45, and are essentially the same shape as the uneven surface of the resin substrate 43. Hence, the uneven structure on each surface of the reflective film 45 is the same as the uneven structure on the surface of the resin substrate 113A, and is a structure in which a plurality of protrusions (or a plurality of recesses) are arrayed periodically, with a fine uneven structure provided on the surface of the protrusions (or recesses).

The thickness of the reflective film 45 is, for example, within a range from 5 to 5,000 nm. The thickness of the reflective film 45 can be calculated from an electron microscope image of the uneven cross-sectional shape, by measuring the thickness of the film at the portion having the highest protrusion height.

The adhesive layer 47 is not essential, but if the reflective image display film 41 has the adhesive layer 47, then the adhesion between the reflective film 45 and the protective layer 49 can be improved. Further, because the effect on the reflective film 45 of the volumetric shrinkage that occurs when the protective layer 49 is formed on the adhesive layer 47 can be moderated, cracking of the reflective film 45 can be favorably suppressed.

The material of the adhesive layer 47 is preferably a thermoplastic resin such as COP, an acrylic resin, polyester, urethane resin, polycarbonate, PVB or EVA. Provided the material of the adhesive layer 47 is a thermoplastic resin, the volumetric shrinkage when forming the adhesive layer 47 on the reflective film 45 can be reduced compared with the case of a cured product of a curable resin, thereby suppressing cracking of the reflective film 45. Further, the effect on the reflective film 45 of the volumetric shrinkage that occurs when the protective layer 49 is formed on the adhesive layer 47 can be more effectively moderated.

The adhesive layer 47 is formed along the surface of the reflective film 45, and the shape of the surface of the adhesive layer 47 on the opposite side from the reflective film 45 (namely, on the side of the protective layer 49) approximately follows the surface shape of the reflective film 45. The uneven structure on the surface of the adhesive layer 47 on the opposite side from the reflective film 45 is the same as the uneven structure on the surface of the reflective film 45, with a plurality of protrusions (or a plurality of recesses) arrayed periodically, but a fine uneven structure not provided on the surface of the protrusions (or recesses). The fine uneven structure on the protrusions of the uneven structure of the reflective film 45 is filled in and flattened by the adhesive layer 47. Flattening the fine uneven structure improves the coating properties of the protective layer 49.

The thickness of the adhesive layer 47 is, for example, within a range from 0.5 to 5 µm. The thickness of the adhesive layer 47 is determined by using a film thickness meter to measure the thickness of the portion of the adhesive layer 47 where the recess on the side of the reflective film 45 has the lowest height.

The protective layer 49 is formed so as to cover the adhesive layer 47, and the shape of the surface on the side of the adhesive layer 47 follows the shape of the surface of the adhesive layer 47 on the side of the protective layer 49. The uneven structure of the surface of the protective layer 49 on the side of the adhesive layer 47 is the same as the uneven structure on the surface of the adhesive layer 47, with a plurality of protrusions (or a plurality of recesses) arrayed periodically, but a fine uneven structure not provided on the surface of the protrusions (or recesses). The surface of the protective layer 49 on the opposite side from the adhesive layer 47 is a smooth surface.

**In** the uneven structure on the surface of the protective layer 49, the maximum height of the protrusions (or the maximum depth of the recesses) is, for example, within a range from 0.5 to 3.0 µm. Here, the maximum height of the protrusions (or maximum depth of the recesses) within the uneven structure of the protective layer 49 refers to the distance, when the protective layer 49 side of the reflective image display film 41 in the thickness direction is deemed the upward side, between the horizontal plane that passes through the highest position P₂₁ of the uneven structure (namely, the position most toward the side opposite the resin substrate 43), and the horizontal plane that passes through the lowest position P₂₂ of the uneven structure (namely, the position most toward the side of the resin substrate 43).

The maximum thickness of the protective layer 49 is, for example, within a range from 5 to 150 µm. Here, the maximum thickness of the protective layer 49 refers to the shortest distance, when the protective layer 49 side of the reflective image display film 41 in the thickness direction is deemed the upward side, from the lowest position P₂₂ of the uneven structure on the surface of the protective layer 49 on the side of the reflective film 45 to the surface (the smooth surface) of the protective layer 49 on the opposite side from the reflective film 45.

It should be noted that the reflective image display film is not limited to the reflective image display film 41 illustrated in the drawings.

For example, the uneven structure on the surface of the resin substrate 43 may be an irregular uneven structure. An " irregular uneven structure" means an uneven structure in which the protrusions or recesses do not appear periodically, and the sizes of the protrusions or recesses are not consistent.

Further, the adhesive layer may be omitted in those cases where, even without the adhesive layer, there are no particular problems in terms of the adhesion between the reflective film and the second transparent resin layer.

### (Method for Producing Functional Film)

The functional film 11 can be produced using conventional methods.

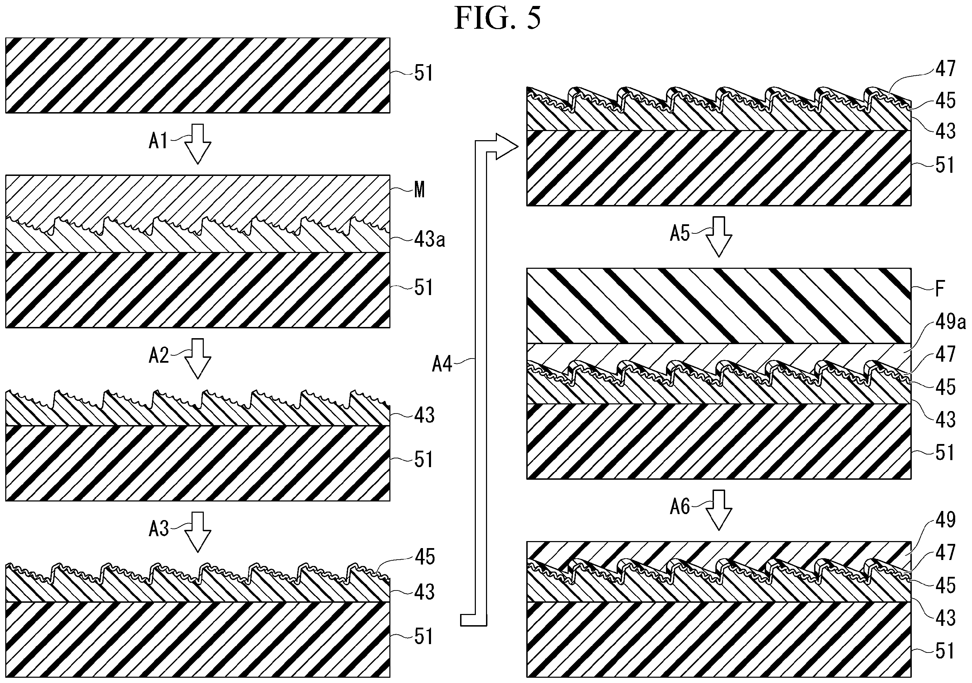

FIG. 5 illustrates one example of the production steps for the reflective image display film 41. The reflective image display film 41 can be produced, for example, by a method having steps A1 to A7 described below.

Step A1: A coating liquid containing a solvent and a photocurable resin and the like is applied to the surface of a substrate film 51 and then dried to form an uncured film 43a. A mold M with an uneven structure formed in the surface is placed on top of the uncured film 43a so that the uneven structure contacts the uncured film 43a.

Step A2: Ultraviolet light or the like is irradiated onto the uncured film 43a to cure the uncured film 43a, thereby forming the resin substrate 43 with the uneven structure of the mold M transferred to the surface of the substrate. The mold M is then detached from the surface of the resin substrate 43.

Step A3: A metal is deposited on the surface of the resin substrate 43 by physical vapor deposition, thereby forming the reflective film 45 as a thin metal film.

Step A4: A coating liquid containing a solvent and a thermoplastic resin and the like is applied to the surface of the reflective film 45 and then dried to form the adhesive layer 47.

Step A5: A coating liquid containing a solvent and a photocurable resin and the like is applied to the surface of the adhesive layer 47 and then dried to form an uncured film 49a. A transparent release film F is then placed on top of the uncured film 49a.

Step A6: Ultraviolet light or the like is irradiated onto the uncured film 49a to cure the uncured film 49a, thereby forming the protective layer 49. The release film F is then removed from the surface of the protective layer 49.

Step A7: The substrate film 51 is detached from the resin substrate 43.

The substrate film 51 may be a single layer film or a laminated film. A transparent film is typically used for the substrate film 51. In terms of having favorable mechanical strength, a stretched film is preferred as the transparent film, and a biaxially stretched film is particularly preferred.

Examples of the material of the substrate film 51 include polyesters (such as PET and polyethylene naphthalate), polypropylene, polymethyl methacrylate, polycarbonate, triacetyl cellulose, polyvinyl alcohol, polyetheretherketone, and COP.

The uneven structure on the surface of the mold M is the inverse shape of the uneven structure on the surface of the resin substrate 43. Examples of the mold M include resin films having an uneven structure formed on the surface of the film. Such resin films having an uneven structure formed on the surface can be produced, for example, by sandwiching a resin material between a mold and a substrate film to transfer the uneven pattern of the mold to the resin, and then following solidification of the resin, applying a dispersion containing fine particles (such as spherical alumina particles) dispersed in a photocurable acrylic resin composition to the surface of the transferred uneven pattern, and then conducting UV irradiation to form a fine uneven structure. The average particle size of the fine particles is, for example, within a range from 0.01 to 10 µm. The average particle size represents the median diameter, which is the average particle diameter (50% diameter), determined using a laser diffraction particle size distribution analyzer.

In those cases where the uneven structure on the surface of the resin substrate 43 is an irregular uneven structure, examples of the mold M used for forming the irregular uneven structure include resin films having an irregular uneven structure formed on the surface of the film. Examples of such resin films having an irregular uneven structure formed on the surface include resin films containing fine particles, and resin films that have been subjected to a sandblasting treatment.

Examples of the method used for applying the coating liquid in steps A1, A4 and A5 include die coating methods, blade coating methods, gravure coating methods, inkjet methods, and spray coating methods.

Examples of the physical deposition method used in step A3 include vacuum deposition methods and sputtering methods.

### <Method for Producing Laminated Glass>

The laminated glass 1 can be produced by stacking the first glass substrate 21, a first intermediate film that becomes the first adhesive layer 13, the functional film 11, a second intermediate film that becomes the second adhesive layer 15, and the second glass substrate 23 in that order, and then heating and bonding the stacked structure.

In those cases where the laminated glass 1 has a large surface area, when stacking the functional film 11 on the first intermediate film or second intermediate film, a plurality of functional films 11 may be arrayed across the surface direction.

The heating temperature during bonding is preferably within a range from 80 to 150°C, and more preferably from 90 to 140°C. Provided the heating temperature is at least as high as the lower limit of the above range, even if unevenness (embossing) exists on the surfaces of the intermediate films (the first intermediate film and second intermediate film), that unevenness is eliminated during bonding, enabling suppression of haze. Provided the heating temperature is no higher than the upper limit of the above range, excessive shrinkage of the functional film and the associated occurrence of wrinkling or foaming can be suppressed.

The heating time during bonding is preferably within a range from 30 to 90 minutes, and more preferably from 45 to 75 minutes. Provided the heating time is at least as long as the lower limit of the above range, embossing on the intermediate films can be eliminated, thereby suppressing haze. Provided the heating time is no longer than the upper limit of the above range, the productivity is favorable, which is desirable from an economic perspective.

The laminate having the stacked glass substrates, the intermediate films and the functional film may be placed in a vacuum bag (rubber pouch), the inside of the bag evacuated, and a preliminary bonding conducted in a hot air oven at a comparatively low temperature, before transferring the laminate to an autoclave and conducting the main bonding process under pressure at a comparatively high temperature.

The heating temperature during the preliminary bonding is preferably at least 80°C but less than 120°C. The heating time during the preliminary bonding is preferably within a range from 30 to 90 minutes.

The heating temperature during the main bonding is preferably within a range from 100 to 150°C. The heating time during the main bonding is preferably within a range from 30 to 120 minutes. The pressure during the main bonding is preferably within a range from 0.6 to 2.0 MPa [abs]. The term [abs] indicates absolute pressure.

### (First Intermediate Film)

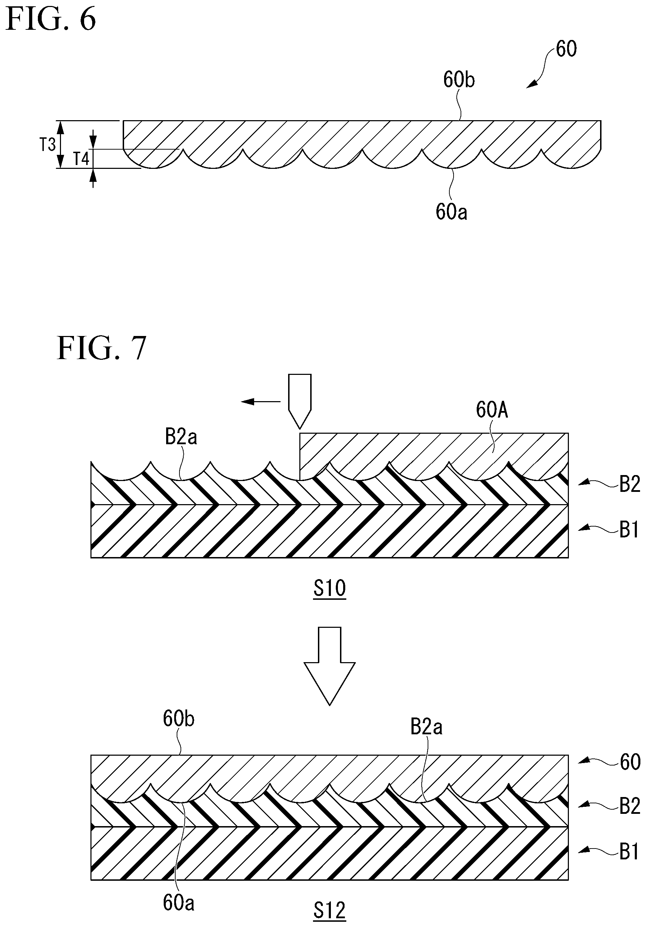

FIG. 6 is a schematic cross-sectional view of a first intermediate film 60 that represents the first adhesive layer 13 prior to lamination.

One surface 60a of the first intermediate film 60 is the surface to which the first glass substrate 21 is laminated. In this example, unevenness (embossing) is formed on the surface 60a. Although this unevenness is not essential, forming this unevenness allows air bubbles to escape during lamination, and can therefore suppress retention of air bubbles between the first adhesive layer 13 and the first glass substrate 21.

The other surface 60b of the first intermediate film 60 is the surface to which the functional film 11 is laminated. In this example, no unevenness is formed on the surface 60b.

The thickness T3 of the first intermediate film 60 is set so that the value of T1, which represents the thickness following lamination, falls within the numerical range described above. T3 is preferably not more than 30 µm, more preferably not more than 25 µm, and even more preferably 10 µm or less. Further, T3 is preferably at least 6.2 µm, more preferably at least 6.4 µm, and even more preferably 6.6 µm or greater.

Here, as illustrated in FIG. 6, T3 indicates the thickness of the thickest portion of the first intermediate film 60, or in other words, the length in the thickness direction between a protruding portion on the surface 60a positioned farthest from the surface 60b, and a protruding portion on the surface 60b positioned farthest from the surface 60a.

From the viewpoint of the air extraction properties, the thickness (height) T4 of the portion in which the unevenness is formed on the surface 60a is preferably at least 5 µm, and more preferably 5.4 µm or greater. Further, from the viewpoint of suppressing any retention of the uneven shape following lamination, T4 is preferably thinner than T3.

Here, T4 indicates the length in the thickness direction between a protruding portion on the surface 60a of the first intermediate film 60 positioned farthest from the surface 60b, and a portion on the surface 60a of the first intermediate film 60 positioned closest to the surface 60b. In other words, T4 may also be termed the maximum height (maximum height roughness) Rz of the surface 60a as prescribed in JIS B 0601.

Further, T3 and T4 also refer to the thickness in a state where a pressure higher than atmospheric pressure is not applied to the first intermediate film 60.

The ratio (T4/T3) of T4 relative to T3 is preferably less than 0.95, more preferably not more than 0.82, and even more preferably not more than 0.63, and moreover, is preferably at least 0.18, more preferably at least 0.22, and even more preferably 0.27 or greater. By ensuring that the ratio T4/T3 falls within this range, the first intermediate film 60 can be kept thin in consideration of avoiding any deterioration in image clarity, while the thickness of the portion lacking unevenness can be maintained, thereby suppressing damage to the first intermediate film 60.

The arithmetic average roughness Ra of the surface 60a of the first intermediate film 60 as prescribed in JIS B 0601 is preferably at least 0.1 µm but not more than 10 µm, more preferably at least 0.5 µm but not more than 10 µm, and more preferably at least 0.5 µm but not more than 5 µm. By ensuring that Ra falls within this range, unevenness can be formed appropriately across the entire surface 60a, thereby ensuring favorable air extraction properties, while any retention of the uneven shape following lamination can be suppressed.

Next is a description of a method for producing the first intermediate film 60.

FIG. 7 is a diagram for describing a production method for the first intermediate film 60.

As illustrated in FIG. 7, in this production method, a forming substrate B2 provided on top of a substrate B1 is first prepared. This forming substrate B2 has unevenness (embossing) formed on a surface B2a on the opposite side form the substrate B1.

In this production method, as illustrated in step S10 of FIG. 7, a coating liquid 60A is applied to the surface B2a of the forming substrate B2.

The coating liquid 60A is used for forming the first intermediate film 60, and is, for example, a liquid containing a thermoplastic resin such as PVB and a solvent. Examples of the solvent include, but are not limited to, ethanol and the like, although any appropriate liquid component may be used. The thermoplastic resin is preferably added in a mass ratio of at least 6% but not more than 15% relative to the total mass of the coating liquid 60A. Further, additives such as silane compounds may also be added to the coating liquid 60A.

The amount of the coating liquid 60A applied to the forming substrate B2 is set so that the value of T3 falls within the above numerical range.

Following application of the coating liquid 60A to the surface B2a of the forming substrate B2, as illustrated in step S12 of FIG. 7, the solvent is removed from the coating liquid 60A by drying. This forms the first intermediate film 60. Subsequently, the first intermediate film 60 and the forming substrate B2 are separated.

The first intermediate film 60 has unevenness (embossing) formed on the surface 60a that contacts the surface B2a of the forming substrate B2. The surface 60b of the first intermediate film 60 on the opposite side from the surface 60a may have no unevenness, and may have an arbitrary shape.

The shape and dimensions of the unevenness of the surface 60a are determined by the shape and dimensions of the unevenness of the surface B2a of the forming substrate B2.

### (Second Intermediate Film)

The second intermediate film may be the same as the first intermediate film with the exception of the film thickness.

The surface of the second intermediate film on the side laminated to the second glass substrate 23 may have any arbitrary shape, but from the viewpoint of suppressing retention of air bubbles between the second adhesive layer 15 and the second glass substrate 23, preferably has unevenness (embossing) formed thereon in a similar manner to the surface 60a.

The surface of the second intermediate film om the side laminated to the functional film 11 may also have any arbitrary shape, but from the viewpoint of suppressing retention of air bubbles between the second adhesive layer 15 and the functional film 11, preferably has unevenness (embossing) formed thereon in a similar manner to the surface 60a.

Commercially available intermediate films may be used as the second intermediate film.

The laminated glass of the present invention may be any structure having a first glass substrate, an adhesive layer-equipped functional film for laminated glass, and a second glass substrate laminated in that order, and is not limited to the laminated glass exemplified in the drawings.

Further, the adhesive layer-equipped functional film for laminated glass according to the present invention may be any film having a functional film with a resin layer, a first adhesive layer provided on one surface of the functional film, and a second adhesive layer provided on the other surface of the functional film, and is not limited to the adhesive layer-equipped functional film for laminated glass exemplified in the drawings.

For example, the laminated glass of the present invention may have a region in which the functional film exists and a region in which the functional film does not exist.

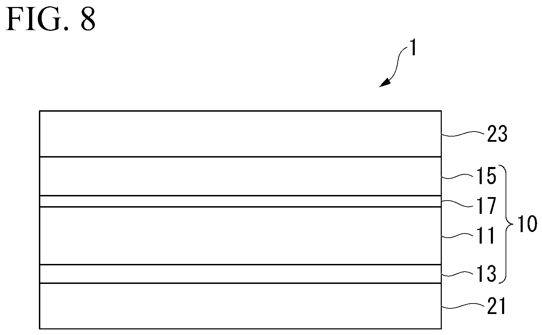

As illustrated in FIG. 8, the adhesive layer-equipped functional film for laminated glass according to the present invention may also have a deposition layer 17 of an inorganic oxide having an isoelectric point measured by the flow potential method of either 6 or less or 7.4 or greater positioned between the functional film 11 and the second adhesive layer 15. The deposition layer 17 is a layer for improving the adhesion between the functional film 11 and the second adhesive layer 15. The deposition layer 17 can be formed using the method disclosed in International Patent Publication 2020/138235. A deposition layer 17 may also be formed on the outermost surface layer of the adhesive layer-equipped functional film for laminated glass.

The adhesive layer-equipped functional film for laminated glass according to the present invention may also have one or more other layers besides the functional film 11, the first adhesive layer 13, the second adhesive layer 15, and the deposition layer 17. Examples

The present invention is described below in further detail using a series of examples. However, the present invention is not limited to these examples.

Examples 1 to 8 are examples of the present invention, and Examples 9 and 10 are comparative examples.

### (Production of Evaluation Samples for Measurement of Tensile Modulus of Elasticity or Coefficient of Linear Expansion)

The coating liquid used for forming a resin layer was applied to the surface of a PET film by a roll-to-roll process using the die coating method, thereby forming a photocurable resin layer, and a separate PET film was then laminated on top of the resin layer. Subsequently, 1,000 mJ of ultraviolet light was irradiated onto the photocurable resin layer, thereby curing the photocurable resin layer and forming a resin layer. The PET films were then detached from the resin layer, and the resulting resin layer was cut to produce an evaluation sample. The evaluation sample for measuring the tensile modulus of elasticity was formed with a shape prescribed in ASTM D1822-L. The evaluation sample for measuring the coefficient of linear expansion (hereinafter also abbreviated as CTE) was formed with a strip-like shape having a length of 25 mm and a width of 4 mm.

### (Tensile Modulus of Elasticity Measurement Method)

A stress-strain curve was measured for the evaluation sample in accordance with JIS K 7161 (ISO 5271) using a universal tester (TENSILON Universal Tester RTC-1210, manufactured by Orientec Corporation) under conditions at 20°C including a chuck separation distance of 20 mm, and a test speed of 10 mm/minute. The initial modulus of elasticity was calculated from the tangent at the maximum gradient near the origin of the curve, and the average value of 10 measurements was deemed the tensile modulus of elasticity (20°C).

### (CTE Measurement Method)

The CTE was measured using a thermomechanical analyzer (Q400 manufactured by TA Instruments, Inc.). Specifically, using a chuck separation distance of 8.1 mm under an air atmosphere, a load (N) equivalent to the evaluation sample surface area (mm²) × coefficient 0.1225 (N/mm²) was applied, while the temperature of the evaluation sample was raised from 20°C to 120°C at a rate of temperature increase of 5°C/minute, and the displacement in the length of the evaluation sample accompanying the linear expansion was measured. Following completion of the measurement, the displacement in the evaluation sample between 30°C and 120°C was determined as the 30 to 120°C CTE (ppm/°C).

### (Thickness Measurement Method)

The thicknesses of films and layers were measured using a contact-type film thickness meter.

### (Birefringence Measurement Method)

Using a WPA-200 (-L) device manufactured by Photonic Lattice, Inc. as the measurement device, the phase difference (retardation) in the thickness direction was measured at a measurement wavelength of 543 nm.

### (Wrinkling Evaluation Method)

The laminated glass was inspected visually, and the state of functional film wrinkling was evaluated using an 11-point scale from 0 points to 10 points, wherein 0 points indicates no visible wrinkling of the functional film inside the laminated glass and 10 points indicates a large number of obvious wrinkles in the functional film. The lower the score awarded, the better wrinkling of the functional film has been suppressed during production of the laminated glass. For example, in the case of a score of 0 points, no wrinkling of the functional film is visible. A score of 1 point means that wrinkling of the functional film is visible, but at a level that is only noticeable if viewed very closely.

Based on the above result, the level of wrinkling was evaluated against the following criteria.
o: evaluation score of 0 points
×: evaluation score of 1 or more points

### (Interference Fringe Evaluation)

Polarized sunglasses (X-Squared sunglasses from Oakley, Inc.) were placed in a position 30 cm from the surface of the first glass substrate of the laminated glass, a smart phone camera was then positioned to enable a photograph of the laminated glass to be taken through the polarized sunglasses, and a photograph of the laminated glass was taken. The existence or absence of interference fringe in the acquired photograph was evaluated against the following criteria.
∘: no interference fringe
×: interference fringe visible

### (Materials Used)

The curable resins used are listed below.
U-6LPA: a urethane acrylate oligomer (U-6LPA, manufactured by Shin-Nakamura Chemical Co., Ltd.)
DPCA-120: a dipentaerythritol polycaprolactone hexaacrylate (KAYARAD DPCA-120, manufactured by Nippon Kayaku Co., Ltd.)
HX-620: a caprolactone-modified neopentyl glycol hydroxypivalate diacrylate (KAYARAD HX-620, manufactured by Nippon Kayaku Co., Ltd.)

The acrylic equivalent weight, number of functional groups, molecular weight, viscosity and refractive index for each of U-6LPA, DPCA-120 and HX-620 are shown in Table 1. The molecular weight indicates the weight average molecular weight. The viscosity refers to the value measured at 40°C using an E-type viscometer (R215 viscometer, manufactured by Toki Sangyo Co., Ltd.). The refractive index indicates the refractive index following photocuring.

**[Table 1]**

| | Acrylic equivalent weight | Number of functional groups | Molecular weight | Viscosity (mPa·s) | Refractive index |
|---|---|---|---|---|---|
| U-6LPA | 127 | 6 | 760 | 500,000 | 1.533 |
| DPCA-120 | 324 | 6 | 1946 | 1,000 to 2,700 | 1.506 |
| HX-620 | 384 | 2 | 768 | 200 to 300 | 1.496 |

### (Preparation of Coating Liquid-1)

A coating liquid-1 for forming a resin layer was obtained by mixing 30 parts by mass of U-6LPA, 40 parts by mass of DPCA-120 and 30 parts by mass of HX-620 as the photocurable resins, and 3 parts by mass of a photopolymerization initiator. Omnirad 184 (1-hydroxycyclohexyl phenyl ketone) manufactured by IGM Resins B.V. was used as the photopolymerization initiator (this also applies in the following description).

### (Preparation of Coating Liquid-2)

A coating liquid-2 for forming an intermediate film was obtained by mixing 100 parts by mass of PVB, 2.5 parts by mass of an epoxy silane (KBM403 manufactured by Shin-Etsu Silicone Co., Ltd.), 2.5 parts by mass of an amino silane (KBM903 manufactured by Shin-Etsu Silicone Co., Ltd.), and 2,000 parts by mass of ethanol.

### (Preparation of Coating Liquid-3)

A coating liquid-3 for forming an adhesive layer was obtained by mixing 90 parts by mass of toluene and 10 parts by mass of a cycloolefin polymer.

### (Example 1)

### <Production of Functional Film>

A release film was first prepared. A PET of high smoothness (COSMOSHINE A4160, manufactured by TOYOBO Co., Ltd.) was used as the release film.

The coating liquid-1 was applied to the surface of the release film using an applicator in sufficient quantity to form a coating film (photocurable resin layer) with a thickness of 250 µm. A transparent PET film-1 was stacked on top of the photocurable resin layer so that the PET film-1 contacted the photocurable resin layer. Then, with the PET film-1 pressed against the photocurable resin layer, 1,000 mJ of ultraviolet light was irradiated onto the photocurable resin layer, thereby curing the photocurable resin layer. This formed a resin layer in which the surface shape of the release film had been transferred to the resin layer. Subsequently, the release film was removed from the resin layer, and the resin layer was cut to dimensions of 250 mm × 250 mm with a roller cutter to obtain a functional film.

### <Production of First Intermediate Film>

A first intermediate film with a form illustrated in FIG. 6 was produced using the procedure illustrated in FIG. 7. T3 was 30 µm, T4 was 1 µm, and the Ra value of the surface 60a was 0.778 µm. The specific production sequence is described below.

First, as illustrated in FIG. 7, a mold was prepared with the forming substrate B2 provided on top of the substrate B1. The forming substrate B2 had unevenness (embossing) formed on the surface B2a on the opposite side from the substrate B1.

The coating liquid-2 was applied to the surface B2a of the mold using an applicator, thus forming a coating film, and the coating film was dried at 100°C for two minutes. As a result, a first intermediate film was formed in which the shape of the surface B2a had been transferred to the surface of the film. Subsequently, the mold was detached from the first intermediate film, and the first intermediate film was cut to dimensions of 250 mm × 250 mm with a roller cutter.

### <Production of Laminated Glass>

Two glass plates (soda lime glass, 300 mm × 300 mm × thickness: 12 mm) were prepared as the first glass substrate and the second glass substrate. These glass plates had a curvature of R500 × R1000.

A commercially available PVB film (300 mm square, thickness: 0.72 µm) was prepared as the second intermediate film. The CTE of the intermediate film was 277 ppm/K.

The first glass substrate, the first intermediate film, the functional film, the second intermediate film, and the second glass substrate were stacked in that order, and the portions of the first intermediate film, the second intermediate film and the functional film protruding from between the first glass substrate and the second glass substrate were cut and removed, yielding a laminate.

This laminate was placed in a vacuum bag, and vacuum evacuation was conducted while the bag was heated in a hot air oven at 100°C and 0.015 MPa [abs] for 30 minutes to achieve preliminary bonding. The preliminary bonded laminate was transferred to an autoclave, and heated at 130°C and 1.0 MPa [abs] for 60 minutes to complete the main bonding and obtain a glass laminate.

### (Examples 2 to 5, 7 and 8, and 10)

With the exception of altering the T3 value of the first intermediate film, laminated glass samples were obtained in the same manner as Example 1.

### (Example 6)

With the exception of using a film produced using the procedure described below as the functional film, a laminated glass was obtained in the same manner as Example 4.

### <Production of Functional Film>

A functional film with a form illustrated in FIG. 4 was produced using the procedure illustrated in FIG. 5.

A transparent PET film-1 and a transparent PET film-2 (both biaxially stretched films, 250 mm square, thickness: 125 µm) were first prepared.

A resin film with an uneven structure formed on the surface was used as a mold. As illustrated in FIG. 4, the uneven structure had a plurality of protrusions arrayed in a single direction with a fine uneven structure provided on the surface of these protrusions, wherein the cross-sectional shape of the protrusions was a right-angled triangle, the maximum height of the protrusions was 10 µm, and the pitch was 40 µm. The fine uneven structure on the surface of the protrusions was formed by applying a filler with an average particle size of 1.5 µm.

The coating liquid-1 was applied to the surface of the mold using an applicator, thus forming a coating film (photocurable resin layer). The PET film-1 was then stacked on top of the photocurable resin layer so that the PET film-1 and the photocurable resin layer made contact. Then, with the PET film-1 pressed against the photocurable resin layer, 1,000 mJ of ultraviolet light was irradiated onto the photocurable resin layer, thereby curing the photocurable resin layer. This formed a resin layer-equipped PET film to which the surface shape of the mold had been transferred. Subsequently, the mold was detached from the resin layer-equipped PET film.

Sputtering methods were used to laminate a Ti-doped zinc oxide film (50 nm), an AgBiNd film (5 nm) and a Ti-doped zinc oxide film (10 nm) in that order to the resin layer-side surface of the obtained resin layer-equipped PET film, thus forming a reflective film with a thickness of 65 nm.

The coating liquid-3 was applied to the surface of the reflective film using a die coating method, and the coating liquid was dried at 110°C for 4 minutes to form an adhesive layer with a thickness of 1 µm.

The coating liquid-1 was applied to the surface of the adhesive layer using a die coating method, and the PET film-2 was then stacked on top. In this state, 1,000 mJ of ultraviolet light was irradiated onto the laminates structure from the side of the PET film-2, thereby curing the photocurable resin layer and forming a protective layer. The PET film-2 was then detached from the protective layer, and the PET film-1 was detached from the resin substrate, thus obtaining a functional film (a reflective image display film) with a thickness of 250 µm.

### (Example 9)

With the exception of using a PET film of thickness 250 µm instead of the functional film, a laminated glass was obtained in the same manner as Example 4.

For the laminated glass of each example, the values for T1, T2, the ratio of T1 relative to T2, the tensile modulus of elasticity for the resin layer, the birefringence and the thickness of the functional film, and the evaluation results for wrinkling and interference fringe are shown in Table 2.

**[Table 2]**

| | First adhesive layer | | Second adhesive layer | | Ratio of T1 relative to T2 (%) | Resin layer | | | Reflective film | Thickness of functional film (µm) | Evaluations | |
|---|---|---|---|---|---|---|---|---|---|---|---|---|
| | Material | T1 (µm) | Material | T2 (µm) | | Material | Modulus of elasticity (GPa) | Birefringence (nm) | | | Wrinkling | Interference fringe |
| Example 1 | PVB | 2 | PVB | 760 | 0.3 | cured product | 0.74 | 37 | no | 250 | o | o |
| Example 2 | PVB | 4 | PVB | 760 | 0.5 | cured product | 0.74 | 37 | no | 250 | o | o |
| Example 3 | PVB | 30 | PVB | 760 | 4.0 | cured product | 0.74 | 37 | no | 250 | o | o |
| Example 4 | PVB | 50 | PVB | 760 | 6.6 | cured product | 0.74 | 37 | no | 250 | o | o |
| Example 5 | PVB | 100 | PVB | 760 | 13.2 | cured product | 0.74 | 37 | no | 250 | o | o |
| Example 6 | PVB | 50 | PVB | 760 | 6.6 | cured product | 0.74 | 37 | yes | 250 | o | o |
| Example 7 | PVB | 150 | PVB | 760 | 19.7 | cured product | 0.74 | 37 | no | 250 | o | o |
| Example 8 | PVB | 210 | PVB | 760 | 27.6 | cured product | 0.74 | 37 | no | 250 | o | o |
| Example 9 | PVB | 50 | PVB | 760 | 6.6 | PET | 5.99 | 4271 | no | 250 | o | × |
| Example 10 | PVB | 380 | PVB | 760 | 50.0 | cured product | 0.74 | 37 | no | 250 | × | o |

In each of the laminated glasses of Examples 1 to 8, no wrinkling occurred and no interference fringe was observed.

In contrast, in Example 9 which used a PET film with a birefringence of 100 nm instead of the functional film, an interference fringe was observed.

In Example 10 in which the T1 value was 380 µm, wrinkling occurred.

### INDUSTRIAL APPLICABILITY

The laminated glass of the present invention is useful, for example, as a transparent screen, a heat-reflective laminated glass, a decorative laminated glass, a soundproof laminated glass, or an electromagnetic wave control laminated glass.

All of the content within the description, claims and abstract of prior Japanese Patent Application No. 2022-139843, filed September 2, 2022 is referenced herein, and incorporated within the disclosure of the present invention.

### REFERENCE SIGNS LIST

- 1: Laminated glass
- 10: Adhesive layer-equipped functional film for laminated glass
- 11: Functional film
- 13: First adhesive layer
- 15: Second adhesive layer
- 17: Deposition layer
- 21: First glass substrate
- 23: Second glass substrate
- 31: Resin layer
- 33: Resin substrate
- 35: Functional layer
- 37: Adhesive layer
- 39: Protective layer
- 41: Reflective image display film
- 43: Resin substrate (resin layer)
- 43a: Uncured film
- 45: Reflective film
- 47: Adhesive layer
- 49: Protective layer (resin layer)
- 49a: Uncured film
- F: Release film
- M: Mold
- 60: First intermediate film

## Claims

1. An adhesive layer-equipped functional film for laminated glass, having a functional film, a first adhesive layer provided on one surface of the functional film, and a second adhesive layer provided on another surface of the functional film, wherein
when the adhesive layer-equipped functional film for laminated glass is used to form a laminated glass, if a thickness of the first adhesive layer is termed T1 and a thickness of the second adhesive layer is termed T2, then T1 is at least 2 µm but less than 380 µm, T2 is at least 380 µm but not more than 760 µm, and a total of T1 and T2 is at least 760 µm, and
the functional film is a resin film having a resin layer, and a phase difference of the resin layer in a thickness direction measured at a wavelength of 543 nm is not more than 100 nm.

2. The adhesive layer-equipped functional film for laminated glass according to Claim 1, wherein T1 is not more than 40% of T2.

3. The adhesive layer-equipped functional film for laminated glass according to Claim 1 or 2, wherein the resin comprises a cured product of a photocurable resin.

4. The adhesive layer-equipped functional film for laminated glass according to Claim 3, wherein the photocurable resin is at least one type of resin selected from the group consisting of photocurable (meth)acrylic resins, photocurable vinyl resins, and photocurable epoxy resins.

5. The adhesive layer-equipped functional film for laminated glass according to Claim 1 or 2, wherein a tensile modulus of elasticity of the resin layer at 25°C is not more than 5 GPa.

6. The adhesive layer-equipped functional film for laminated glass according to Claim 1 or 2, wherein at least one of the first adhesive layer and the second adhesive layer is a polyvinyl butyral resin layer.

7. The adhesive layer-equipped functional film for laminated glass according to Claim 1 or 2, wherein the functional film is an image display film.

8. A laminated glass having a first glass substrate, the adhesive layer-equipped functional film for laminated glass according to Claim 1 or 2, and a second glass substrate in that order.

9. The laminated glass according to Claim 8, wherein lengths of a first direction and a second direction that intersect orthogonally within a plane of a main surface are each 200 mm or greater.
